(19) **Europäisches Patentamt**

**European Patent Office**

**Office européen des brevets**

(11) **EP 1 517 136 A2**

(12) **EUROPEAN PATENT APPLICATION**

(43) Date of publication:
**23.03.2005 Bulletin 2005/12**

(51) Int Cl.[7]: **G01N 23/20, G01N 25/16**

(21) Application number: **04255482.4**

(22) Date of filing: **10.09.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventor: **Kawamura, Shigeru**<br>**Yamanashi-prefecture (JP)** |
| (30) Priority: **10.09.2003 JP 2003318554** | (74) Representative: **Jones, Keith William et al**<br>**Murgitroyd & Company**<br>**Scotland House**<br>**165-169 Scotland Street**<br>**Glasgow G5 8PL (GB)** |
| (71) Applicant: **Tokyo Electron Limited**<br>**Tokyo (JP)** | |

(54) **APPARATUS AND METHOD FOR MEASURING OR APPLYING THERMAL EXPANSION/SHRINKAGE RATE**

(57) An object of the present invention is to measure the thermal expansion/shrinkage rate of a thin layer and to apply the results of the measurement. While a specimen is heated by a heater and held at a predetermined temperature, it is exposed to X-rays emitted from an X-ray source and the reflection of the X-rays is measured by an X-ray detector. The thickness of the thin layer at the predetermined temperature is calculated from the reflection rate of the X-rays. As the thin layer is heated further, its temperature is measured. The thermal expansion rate or expansion/shrinkage rate is determined from the thickness at each temperature measurement. With the use of a program for determining the temperature increase and decrease, the curing conditions for the thin layer can be determined in response to the thermal expansion/shrinkage rate. Also, when the apparatus is installed in a multi-chamber system, the layer depositing conditions can be modified.

Fig.4

## Description

BACKGROUND OF THE INVENTION

Field of the Invention

The present invention relates to measurement or application of a thermal expansion rate, a thermal shrinkage rate or a thermal expansion/shrinkage rate, for example, measurement or application of a thermal expansion/shrinkage rate of a semiconductor thin film.

Description of the Related Art

There are some methods available for measuring the thermal expansion rate, the thermal shrinkage rate, or the thermal expansion/shrinkage rate. For example, a laser thermal expansion meter is known which uses the interference of a laser beam. Also, a thermal machine analyzer for measuring the thermal expansion rate has been proposed. The laser thermal expansion meter enables the thermal expansion rate to be measured to an accuracy of approximately $\pm 20$ nm and resolution of 2 nm by detecting and calculating the movement of an interference pattern of a laser beam on a specimen which, for example, has an outer diameter of 6 to 7 mm, length of 6 to 15 mm and has been heated up. The thermal machine analyzer employs a differential transformer for detecting the difference in the thermal expansion between a specimen and a reference object. Accordingly, both methods require a significantly large sized specimen.

To increase the velocity of electricity transmission in Cu wirings in the semiconductor manufacturing process, $SiO_2$ of the interlayer insulating film has been replaced by a low-k layer which has a lower dielectric constant, thus minimizing the parasitic capacitance across the wirings. The low-k layer is commonly made of, for example, FSG (fluosilicate glass), SiOC, or an organic polymer which has however a higher thermal expansion rate than $SiO_2$. More specifically, while the thermal (linear) expansion rate of $SiO_2$ is approximately 0.4 $\times$ $10^{-6}$ (0.4 ppm/°C), that of an organic low-k layer is 200 ppm/°C, and that of SiOC is 25 ppm/°C. The thermal (linear) expansion rate of a low-k layer is as high as several tens to several hundreds of ppm/°C while that of $SiO_2$ is 0.4 ppm/°C. Also, a high-k layer which has a higher dielectric constant than $SiO_2$ (and is used as the insulating layer gate of a transistor for suppressing leakage current) has a higher thermal expansion rate than $SiO_2$.

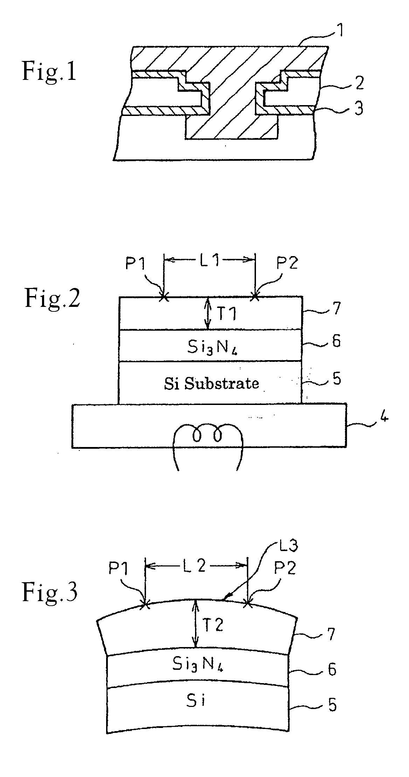

In a step of the semiconductor manufacturing process, the low-k layer is applied over a layer carrying Cu wirings for insulation, and is provided with via holes which are then filled with Cu plating to connect upper and lower wirings. One example is illustrated in the cross sectional view of Fig. 1. A Cu wiring layer 1, a low-k layer 2, and a barrier layer 3 are shown in Fig. 1. Such a structure is produced by annealing the Cu wiring layer at 200 to 400°C. As a result, the low-k layer for insulation expands and then shrinks as it cools down to the normal temperature. Because the low-k layer and the Cu wiring layer are quite different in their thermal expansion rate, they may separate from each other. In addition, when the low-k layer is heated up to 400 to 500°C in a CVD step, it will also expand and then shrink as it cools down. This is unavoidable when a high-k layer, or any other material which has a higher thermal expansion rate, is used. In any event, it is possible that the use of a layer which has a higher thermal expansion rate will generate a fault in such a multi-layer structure of a device.

It is therefore essential to accurately measure the thermal expansion/shrinkage rate. However, the conventional thermal expansion rate measuring means are designed for measuring a specimen having a thickness of several millimeters and are not effective for measuring a specimen of 1 μm thickness (see JP-A 08-177877 (1996)). A technique is known in which two markings are provided on a cassette in which a specimen is loaded, the thermal expansion rate is measured from the change in the distance between the two markings, and the temperature of the cassette or the specimen is calculated from measurement of the thermal expansion rate, but the technique is not intended for measuring the thermal expansion rate of a thin film or layer in the semiconductor manufacturing process (see JP-A 05-83135 (1993)).

SUMMARY OF THE INVENTION

It is an object of the present invention to provide a thermal expansion/shrinkage rate measuring apparatus and an automatic thermal expansion/shrinkage rate measuring system for automatically measuring the thermal expansion/shrinkage rate of a thin layer, and to use measurements of the thermal expansion/shrinkage rate for depositing the thin layer.

In a first aspect of the present invention, an automatic thermal expansion/shrinkage rate measuring system includes heating a thin layer specimen and measuring the reflection rate of X-rays at each predetermined temperature with an X-ray reflection rate measuring means, calculating the thickness of the thin film from the reflection rate of X-rays, and determining the thermal expansion/shrinkage rate from the thickness calculated at each predetermined temperature. Accordingly, the system of the present invention can automatically and accurately determine the thermal expansion/shrinkage rate from the measured thickness.

Also, when the thin layer varies within a specific range of expansion/shrinkage rate, its thermal expansion/shrinkage can be calculated in that range. Hence, the thermal expansion/shrinkage rate can always be maintained at a favorable level regardless of the variation of the expansion/shrinkage rate.

In a second aspect of the present invention, a thermal expansion/shrinkage rate measuring apparatus is provided with an X-ray reflection rate measuring unit and a specimen heating unit for heating a thin layer specimen, wherein the thin layer specimen is heated, the reflection rate of X-rays is simultaneously measured, the thickness of the thin layer is calculated from the reflection rate of X-rays, and the thermal expansion/shrinkage rate is determined from a change in the thickness of the thin layer. Accordingly, the measurement of the thermal expansion/shrinkage rate which is not successfully achieved by the prior art can be implemented.

In a third aspect and a fourth aspect of the present invention, an apparatus and a method for measuring the thermal expansion/shrinkage rate are provided including a programmable specimen temperature controller controlling the temperature of a thin layer specimen with the use of a specific program, measuring the reflection rate of X-rays reflected at predetermined temperatures, calculating the thickness of the thin layer from the reflection rate of X-rays, and determining the thermal expansion/shrinkage rate from a change in the thickness of the thin film. This allows the temperature of the specimen to be controlled with the desired program, hence producing accurate data.

In a fifth aspect of the present invention, a method of determining thin layer heating conditions includes exposing a thin layer deposited on a substrate to X-rays, detecting the reflection rate of X-rays from the thin layer, and determining the optimum heating conditions in a heating step by modifying a temperature increasing and decreasing program for the heating step.

In a sixth aspect of the present invention, a method for modifying layer forming conditions includes selecting at random a processed substrate on which a thin layer is deposited by a layer forming apparatus, exposing the processed substrate to X-rays, calculating the thermal expansion/shrinkage rate of the thin layer, and modifying the layer forming conditions for the layer forming apparatus in response to the thermal expansion/shrinkage rate.

In a seventh aspect of the present invention, a multi-chamber processing apparatus has at least one plural processing chamber as a thermal expansion/shrinkage rate measuring chamber for measuring the thermal expansion/shrinkage rate, which includes a thermal exposure/shrinkage rate measuring apparatus provided for measuring the thermal expansion/shrinkage rate with the use of X-rays. This aspect permits measurement of the thermal expansion/shrinkage rate by the method of the present invention to be assembled in a mass-production system and can hence be utilized for management of the progress of work.

In an eighth aspect of the present invention, a method for modifying low-k layer synthesizing conditions includes exposing a low-k layer deposited on a semiconductor substrate to X-rays, calculating the thermal expansion/shrinkage rate of the low-k layer, and modifying the synthesizing conditions for the low-k layer in response to the thermal expansion/shrinkage rate.

BRIEF DESCRIPTION OF THE DRAWINGS

Fig. 1 is an illustration showing drawbacks of the prior art;
Fig. 2 is a (first) illustration showing a drawback due to thermal expansion;
Fig. 3 is a (second) illustration showing the drawback due to thermal expansion;
Fig. 4 is a schematic view of a thermal expansion/shrinkage rate measuring method of a first embodiment of the present invention;
Fig. 5 is a flowchart showing the thermal expansion/shrinkage rate measuring method of the first embodiment;
Fig. 6 is a diagram illustrating results obtained from measurement of the thermal expansion rate according to the present invention;
Fig. 7 is a diagram illustrating results obtained from measurement of the thermal shrinkage rate according to the present invention;
Fig. 8 illustrates a profile of the temperature increasing and decreasing program for calculating the thermal expansion/shrinkage rate of a second embodiment of the present invention;
Fig. 9 illustrates a (first) profile showing the difference in the layer thickness between the temperature increase and the temperature decrease according to the present invention;
Fig. 10 illustrates a (second) profile showing the difference in the layer thickness between the temperature increase and the temperature decrease according to the present invention;
Fig. 11 is a schematic cross sectional view of a structure of a semiconductor memory;
Fig. 12 illustrates a profile of the temperature control in a heating/cooling step of the semiconductor manufacturing process;
Fig. 13 is a schematic view of a multi-chamber processing apparatus equipped with a thermal expansion/shrinkage rate measuring chamber according to the present invention; and
Fig. 14 shows a list of typical materials with their thermal (linear) expansion/shrinkage rates.

DESCRIPTION OF THE PREFERRED EMBODIMENTS

Prior to the description of the automatic thermal expansion/shrinkage rate measuring system of the embodiments of the present invention, the basis and applicable procedures for embodying the present invention will be explained.
As shown in Fig. 2, a $Si_3N_4$ layer 6 and a low-k layer 7 are deposited on a Si substrate 5 and heated with a heater 4. This causes the structure to be deflected due to the difference in the thermal expansion rate between the two layers, as exaggeratedly illustrated in Fig. 3. As the distortion along the left and right directions is significant, the thermal expansion rate can be calculated from a change in the distance between two points P1 and P2 shown in Fig. 2. However, as apparent from Fig. 3, the distance L2 measured for comparison with the original distance L1 is submissive to the actual distance L3 along the curved (deflected) surface and fails to enable calculation of the thermal expansion rate. It is true, in view of the vertical measurement, that a change in the thickness from T1 (Fig. 2) to T2 (Fig. 3) can precisely indicate the thermal expansion rate.

The present invention is hence directed towards calculating the thermal expansion rate or the thermal shrinkage rate from two measurements T1 and T2 of the thickness.

The measurement procedure employed for determining the thermal expansion/shrinkage rate according to the present invention will now be explained. In this embodiment, the thickness is measured using an X-ray reflectivity measuring method. The X-ray reflectivity measuring method involves projecting a beam of X-rays to the surface of a test piece at different angles of incidence, which are ranged from a minimum to a maximum, and continuously measuring the intensity of the projected X-rays over the range of angles. The all X-rays are reflected (at maximum intensity) at the beginning and as the incident angle passes the critical angle, X-rays begin to pass through the layer, and the reflected X-rays decrease. Simultaneously, the reflection of X-rays on one side of the layer starts interfering with a second reflection of X-rays on the next interface or the other side of the layer. This causes the amount of reflected X-rays at the surface to be gradually reduced. Accordingly, the thickness of the layer is calculated from the cycle of oscillations. This thickness measuring technique is well known.

The technique of calculating the thickness using the X-ray reflectivity measuring method is more advantageous than: a technique using a light interference meter due to the fact (1) that the thickness can be measured regardless of a change in the optical constant of a material of the layer to be measured; and a laser-based technique (measuring the distance from an external reference point to a point on the surface) due to the fact (2) that the resolution is high.

The preferred embodiments of the present invention will now be described.

First Embodiment

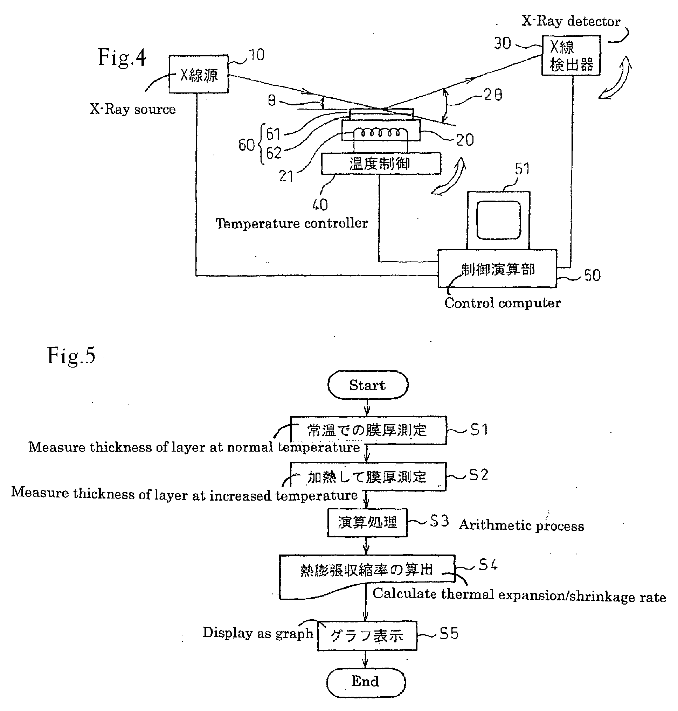

Fig. 4 illustrates an arrangement of the system according to the present invention.

As a beam of X-rays is emitted from an X-ray source 10 and projected onto a specimen 60 (having a thin layer 61 deposited on a substrate 62), its reflection produced on the surface of the specimen 60 is then received by a detector 30. The detector 30 measures the intensity of the reflection of X-rays received. The specimen 60 is placed on a specimen table 20. Also, a heater 21 for heating the specimen 60 is disposed on the specimen table 20. The heating action of the heater 21 is controlled to a predetermined temperature by a control signal from a temperature controller 40. While the position of the X-ray source 10 is fixed, the specimen table 20 and the temperature controller 40 are controllably turned so that the incident angle θ of X-rays shifts in steps from a minimum smaller than the critical angle to a maximum. Simultaneously, the X-ray detector 30 is controllably positioned so that the angle between the emission of X-rays from the X-ray source 10 and the reflection of X-rays from the specimen 60 is equal to 2θ. In addition, a control computer 50 is provided for controlling all the actions of the system and calculating the thermal expansion/shrinkage rate. The result of the measurement is displayed in graphic form on a display 51.

The system having the above described arrangement is operated by a program stored in the control computer 50 to automatically calculate the thermal expansion/shrinkage rate.

Fig. 5 illustrates a flowchart of the program. The program starts with step S1 of measuring the thickness of a layer at the normal temperature (20°C). More particularly, as the incident angle of X-rays on a specimen 60 maintained at the normal temperature is gradually increased from the minimum (smaller than a critical angle), the intensity of reflection of X-rays is received and detected by the detector 30. The thickness of a layer 61 is then calculated from the cyclic oscillation of the intensity of X-rays which is gradually decayed.

This is followed by step S2 of heating the specimen from the normal temperature to a predetermined temperature and calculating the thickness of the layer held at that predetermined temperature in the same manner as step S1. In general, as the temperature is increased in equal intervals, the thickness of the layer is calculated in steps over the different temperatures. For example, the temperature can be increased in 20°C steps from 20°C to 200°C.

In step S3, the change in the thickness between the layers is measured. When the change in the thickness due to the temperature difference is greater than a predetermined permissive level, the thermal expansion/shrinkage rate by which the change in the thickness is determined can be calculated from a start or end point (the point of inflection) where the thermal expansion/shrinkage rate starts to change.

In step S4, the thermal expansion/shrinkage rate is calculated using the following formulas:

(1) where no point of inflection is present:

$$[(Tc - To)/(To \times (tc - to))] \times 10^6,$$

(2) where point of inflection is present:

$$[(Tc1 - To)/(To \times (tc1 - to))] \times 10^6,$$

wherein Tc is the thickness at the temperature at the end of measurement, To is the thickness at the temperature at the start of measurement, Tc1 is the thickness at the temperature at the point of inflection, tc is the temperature at the end of measurement, to is the temperature at the start of measurement, and tc1 is the temperature at the point of inflection.

The thermal expansion/shrinkage rate after the point of inflection will be calculated from the point of inflection designated as the start of measurement.

In step S5, a graph plotting a profile of the thickness of the layer in relation to the temperature is displayed on the display.

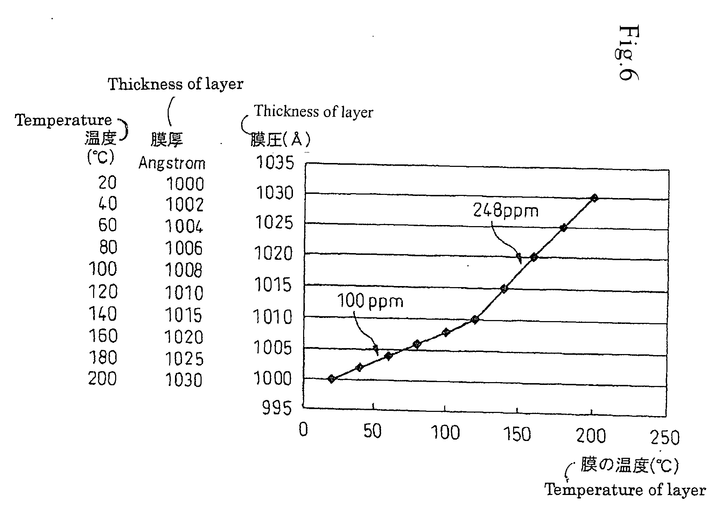

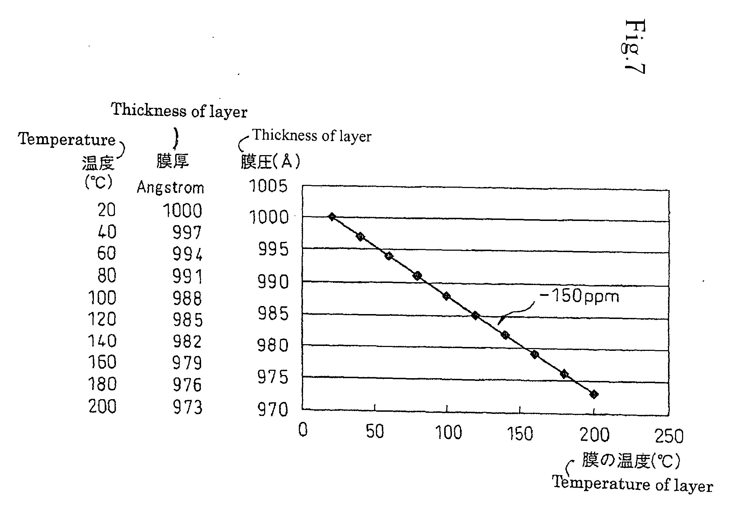

Examples of the profile are shown as a graph in Figs. 6 and 7 illustrating the relationship between the thickness and the temperature.

The profile shown in Fig. 6 illustrates a layer with thickness of 1000 angstroms at the normal temperature (20°C) with temperature being varied or increased in 20°C steps, from which the thermal expansion rate is calculated. As shown in this example, the profile has a point of inflection at 120°C (where the thermal expansion rate is changed). More particularly, the thermal expansion rate is changed from 100 ppm to 248 ppm. The point of inflection may represent a glass transition point. Even if the material of the layer has an abrupt variation in the thermal expansion, its thermal expansion rate can favorably be calculated with consistency.

Fig. 7 illustrates a profile of the thermal shrinkage. The thermal shrinkage is inherent to a material having a permanent deformation property. As shown similarly to above, the layer with thickness of 1000 angstroms at the normal temperature is measured as temperature is increased in 20°C steps, where the thermal shrinkage rate is 150 ppm.

Although the specimen is heated and thickness is measured in this embodiment, it may be cooled down before being measured. The calculation of the thermal expansion/shrinkage rate is preceded by the measurement of the thickness at all temperatures and may be conducted at any intermediate step of the temperature measurement. It would also be understood that a variety of forms of display on the display may be employed with equal success.

Although a single layer is measured for ease of description of the embodiment, two or more layers may equally be subjected to the measurement with an X-ray reflectivity measuring method, hence improving the effect of the measurement. More specifically, the present invention is directed towards the calculation of the thermal expansion/shrinkage rate from a pattern of interference between the reflection of X-rays produced on the surface or one side of a layer and the second reflection of X-rays passed through the layer and reflected from the next interface or the other side of the layer. Since two or more of the layers are deposited, the projection of X-rays is reflected from the plural interfaces, thus allowing the thermal expansion/shrinkage rate of all the layers to be calculated through a single measurement step. The present invention is hence applicable with higher effectiveness to the calculation of the thermal expansion/shrinkage rate of two or more layers such as in a multi-layer structure deposited on a semiconductor substrate.

Second Embodiment

It was found through the measurement of the thermal expansion/shrinkage rate of each layer on a semiconductor wafer according to the foregoing embodiment of the present invention that the thermal expansion rate and the thermal shrinkage rate were not identical in a single material and that a change in the thermal expansion or shrinkage was not always linear but exhibited a curved profile. Also, it was proved that the thermal expansion/shrinkage rate varied as the velocity of temperature increase or decrease changed.

Therefore, calculating the thermal expansion/shrinkage rate of each layer on a semiconductor wafer is needed to measure the thickness over both the increasing period and the decreasing period of the temperature. It is also necessary in practice to conduct the measurement at the same rate of temperature increase and decrease as of the heating step in the semiconductor manufacturing process. A thermal expansion/shrinkage rate measuring apparatus according to a second embodiment of the present invention is therefore modified in which the temperature of a thin layer to be measured is programmably increased or decreased. In other words, with the increase or decrease of the temperature being controlled, the thermal expansion/shrinkage rate can automatically be calculated.

The thermal expansion/shrinkage rate measuring apparatus of the second embodiment is similar to that of the first embodiment but is equipped with a specimen temperature controller which is programmable for controlling the temperature of a specimen. More specifically, while the temperature of the specimen is controlled with a temperature increasing or decreasing program, the reflection of X-rays is measured at a predetermined temperature during the increase or decrease of the temperature and used for determining the thickness of the layer. Then, the thermal expansion/shrinkage rate can be calculated from the change in the thickness. The programmable specimen temperature controller may be assembled in the temperature controller 40 shown in Fig. 1 or implemented by a combination of the temperature controller 40 and the control computer 50.

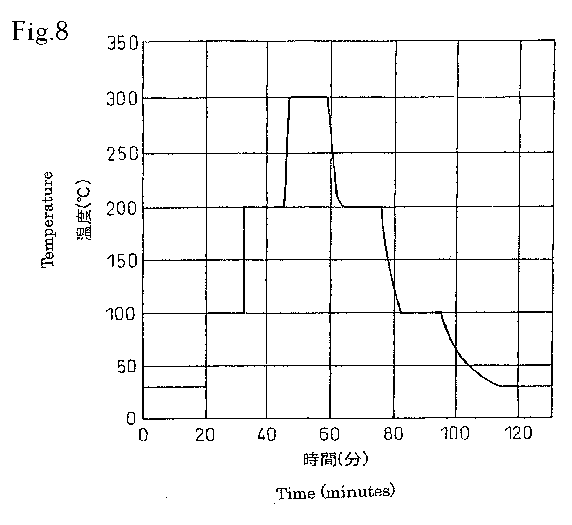

Fig. 8 illustrates an example of the temperature increasing and decreasing program provided for measuring the thermal expansion/shrinkage rate. The temperature increasing and decreasing program is designed for controllably determining the temperature at the measuring stage of an X-ray thermal expansion/shrinkage rate measuring apparatus as shown in the profile, where the horizontal axis represents time and the vertical axis represents temperature. In this example, the temperature is increased in an initial stage from 30°C to 100°C, 200°C, and 300°C. Then, the temperature is decreased to 200°C and 100°C before being returned to 30°C. The temperature is held for ten minutes at each of the above temperatures. While the temperature is being held at a desired degree, the thickness can be measured with the use of X-rays within, for example, seven minutes.

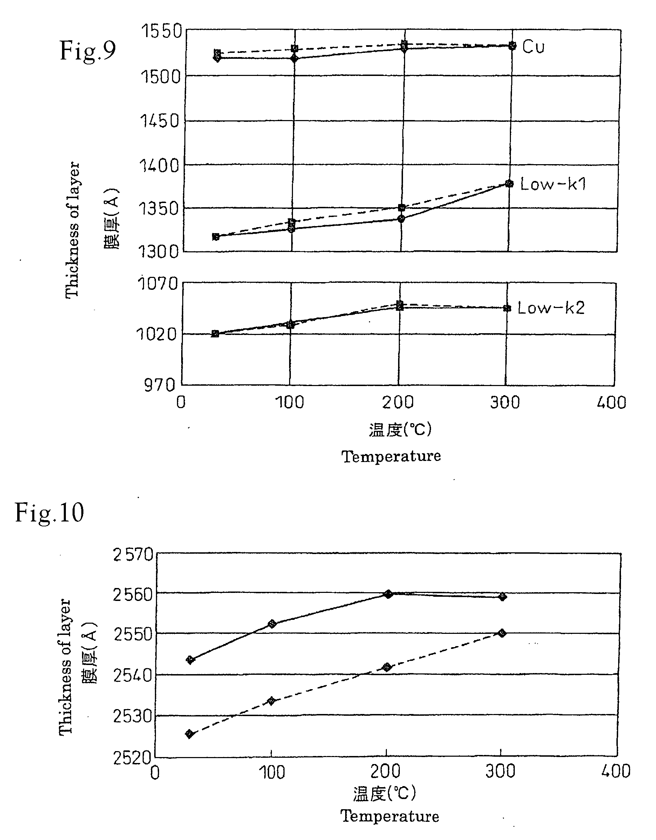

Some results of the measurement are shown in Figs. 9 and 10.

Fig. 9 illustrates profiles of two low-k layers, low-k1 and low-k2, of which the thickness varies as the temperature increases and decreases.
The profile denoted by the solid line is during the heating or temperature increase, while the profile denoted by the broken line is during the cooling or temperature decrease. As the low-k2 layer is heated up to over 100°C but not higher than 200°C, its temperature increases at a constant rate. When its temperature exceeds 200°C, the layer remains substantially unchanged before 300°C. As the layer is cooled down, its temperature decreases in the same profile as of the heating process. However, while the low-k1 layer is cooled down from 300°C to 200°C, its shrinkage rate stays high. The shrinkage rate becomes small during the cooling from 200°C to the normal temperature.

Fig. 10 illustrates a profile of another low-k layer, low-k3, which is different from those layers shown in Fig. 9. As is apparent from Fig. 10, the thickness of the layer is increased from about 2544 angstroms to 2560 angstroms when heated up to 200°C. Its thickness then remains unchanged even when the layer is further heated up to 300°C. While the layer remains without further heating at 300°C, its thickness decreases to 2550 angstroms. As continuously cooled down, the layer is linearly decreased to 2526 angstroms. As is apparent from Fig. 10, the thickness variation is different between the temperature increase and the temperature decrease. This may be explained by the low-k3 layer not remaining the same but shrinking by 10 angstroms due to evaporation of some components at 300°C. As the layer is cooled down to the normal temperature, the difference in the thickness between the temperature increase and the temperature decrease is as high as 18 angstroms. Accordingly, it is assumed that separation of the low-k3 layers is likely to occur due to residual stress.

As described, this embodiment allows the thermal expansion/shrinkage rate to be calculated under different conditions. In particular, as the thermal expansion/shrinkage rate is determined at the same rate of temperature increase and decrease as of the heating step of an actual process, it can effectively be used for management of the semiconductor manufacturing process.

It would be understood that the temperature increasing and decreasing program according to the present invention is not limited to the embodiment shown in Fig. 8 where both the rates of temperature increase and decrease are sharp. The temperature increase and decrease rates may favorably be determined as desired.

Third Embodiment

A third embodiment of the present invention is a method of determining curing conditions in the semiconductor manufacturing process from the thermal expansion/shrinkage rate calculated by the present invention.

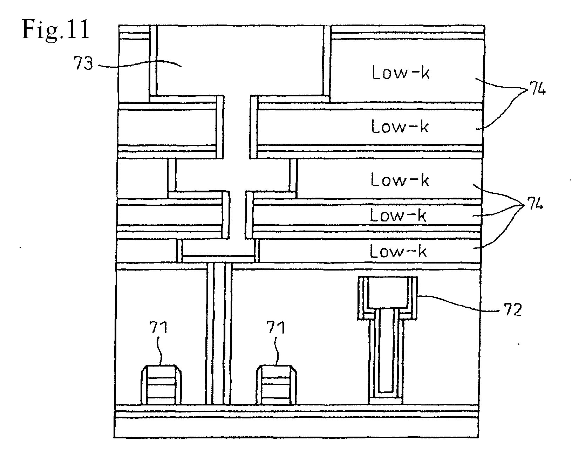

A semiconductor memory as a semiconductor device will first be described referring to Fig. 11. The description involves a primary part of the memory for ease of understanding. Wiring layers are deposited on a lower layer where transistors 71, capacitors 72, and other components are developed. Each wiring layer mainly includes of a low-k layer 74 and a pattern of copper wiring 73 fabricated by electric plating. In a curing step in the semiconductor manufacturing process for the semiconductor device, the pattern of copper wiring 73 is heated up to 250 to 400°C to improve the properties. The heating causes re-crystallization of the copper and evaporation of volatile components in the low-k layer. Accordingly, while the pattern of copper wiring is annealed, the low-k layer is cured to finish the device.

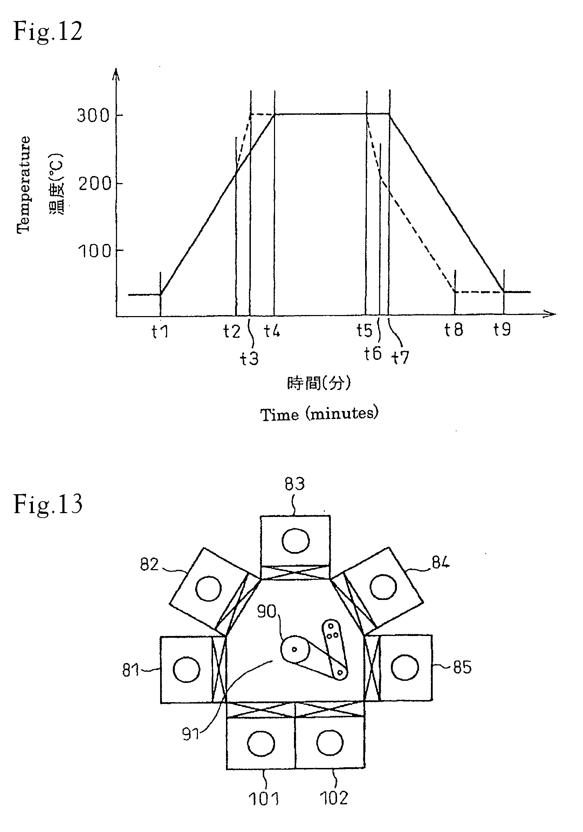

The curing conditions include heating temperature, heating speed, holding time at a given temperature, cooling speed, and type of gas. Fig. 12 illustrates a profile of the curing conditions of a low-k2 layer provided as the low-k layer which is heated from 30°C to 300°C. In Fig. 12, the solid line represents the layer heated at a constant rate from 30°C to 300°C during a time from t1 to t4, held at 300°C from t4 to t7, and cooled down from t7 to t9.

It is presumed that the temperature increasing rate from t1 to t4, the holding time from t4 to t7, and the temperature decreasing rate from t7 to t9 are predetermined to optimum settings for each semiconductor manufacturing process. However, in view of the measurement results of the thermal expansion/shrinkage rate according to the present invention, the step in the semiconductor manufacturing process may preferably be modified. More specifically, it is known that the characteristics of the low-k2 layer with the thermal expansion/shrinkage rate are as shown in Fig. 9, where the thickness is constantly increased from 30°C to 200°C but does not expand at over 200°C. The thickness is held at a constant level regardless of the increase of the temperature from 200°C to 300°C. This permits heating to be carried out constantly up to 200°C and then speeded up from 200°C to 300°C. As no change in its thickness is detected during the increase of the temperature from 200°C to 300°C, the layer stays unstressed. Accordingly, the low-k layer will rarely be separated by the effect of any remaining stress.

Such a preferable profile in the curing conditions is denoted by the broken line in Fig. 12. As shown, the layer is heated at a moderate rate from t1 to t2 and then sharply from 200°C at t2 to 300°C at t3. Then, the temperature is held at 300°C from t3 to t5. The layer is sharply decreased in temperature from 300°C at t5 to 200°C at t6 before being moderately cooled down from t6 to t8. This avoids the low-k layer from being stressed and also minimizes the duration of curing (t8 to t9). As a result, the curing conditions can be optimum as compared with the conventional method.

While Fig. 12 illustrates one example of the profile, controlling of the temperature according to the present invention can arbitrarily be conducted with desired settings of the temperature increasing rate, temperature decreasing rate, and holding time. The optimum form of the profile for increasing and decreasing the temperature is predetermined to match the system and used for calculating the thermal expansion/shrinkage rate. Accordingly, the curing step can be conducted under optimum conditions.

Fourth Embodiment

In the semiconductor manufacturing process, the optimum conditions or optimum profiles of the temperature increase and decrease which have been determined are programmed and utilized at the actual step for mass-production. This embodiment of the present invention is directed towards the use of the thermal expansion/shrinkage rate measured for management of products in the mass-production procedure.

When 1000 or 10000 semiconductor devices are manufactured under equal conditions, the thermal expansion/shrinkage rate may be calculated by the method of the present invention, for example, on one out of 100 items. It is now assumed that the thermal expansion rate of a low-k layer to be examined is 100 ppm and the controllable range is ±5 ppm. If the thermal expansion rate diverts from a range of 100 ppm ±50, its lot of 100 items is judged as defective. Also, the quality of the layers can be judged in addition to the quality of the semiconductor devices. Moreover, the conditions for depositing the layers, including the flow of gas, the pressure of gas, the heating temperature, and the holding time can favorably be modified while the measurement of the thermal expansion/shrinkage rate is being monitored.

Fig. 13 illustrates a multi-chamber processing apparatus equipped with a thermal expansion/shrinkage rate measuring chamber according to the present invention. The multi-chamber processing apparatus has a group of processing stations disposed around a conveying apparatus for carrying out a series of processing actions in succession under vacuum conditions. More particularly, the multi-chamber processing apparatus shown in Fig. 13 comprises a group of processing chambers 81 to 84 for depositing the layers, a conveying chamber 91 including an arm 90 for conveying a substrate to be processed from one chamber to another, a pair of cassette chambers 101 and 102 for loading and unloading of the substrates, and a thermal expansion/shrinkage rate measuring chamber 85. The processing chambers 81 to 84 can be accompanied with the desired apparatuses for a given process. For example, the desired apparatuses may include a CVD apparatus, an etching apparatus, and a rinsing apparatus. The thermal expansion/shrinkage rate measuring chamber 85 is to the same as the apparatus of the second embodiment which includes at least an X-ray source, an X-ray detector, and a temperature controller for controlling the temperature of a substrate to be processed. During operation, the temperature of the substrate is controllably increased and decreased using a predetermined temperature increasing and decreasing program and the thermal expansion/shrinkage rate of each layer on the substrate can be calculated from measurement of the reflection of X-rays.

In the multi-chamber processing apparatus, the substrates to be processed are subjected to CVD or an etching process in one of the processing chambers 81 to 84 and then transferred from one chamber to another for another process by the action of the arm 90 of the conveying chamber 91, which remains in vacuum in the same manner as of the other chambers. After the deposition of the layers, the substrates are conveyed, e.g., every 100 items as one lot, to the thermal expansion/shrinkage rate measuring chamber 85 where the thermal expansion/shrinkage rate of each layer is measured to examine whether the finished semiconductor devices of the lot are qualified or not, or whether the layer processing conditions are correct or not.

As described previously, this embodiment of the present invention allows the thermal expansion/shrinkage rate to be calculated from two or more layers on the wafer and can thus be effective for monitoring the layer processing conditions.

Fifth Embodiment

The thermal expansion/shrinkage rate measuring method of the present invention is applied to a method of determining the manufacturing conditions of low-k layers. This embodiment is a method of determining the synthesizing conditions of each low-k layer while monitoring the thermal expansion/shrinkage rate of the low-k layer.

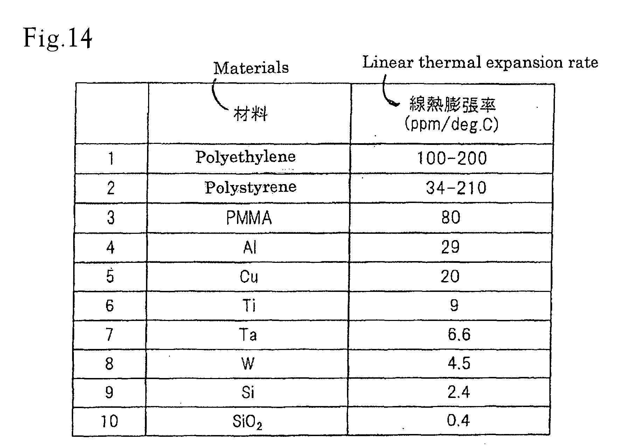

The low-k layer is typically made of an inorganic/organic mixture material such as SixOyCzHw or an organic material such as CxHyOz. Fig. 14 illustrates the thermal (linear) expansion rate of polyethylene, polystyrene, and poly-methyl-methacrylate (PMMA) as the typical organic materials and other metallic materials including Si and $SiO_2$ which are commonly used in the semiconductor manufacturing process. For example, the thermal expansion rate is 20 ppm of Cu, 29 ppm of Al, 6.6 ppm of tantalum used for a barrier, or 2.4 ppm of inorganic Si. The organic materials have higher thermal expansion rate than the other materials. It is understood that the materials 1 to 8 shown in Fig. 14 of which the thermal (linear) expansion rate is higher than W can successfully be measured by the method of the present invention.

As the low-k layer is commonly accompanied with a pattern of Cu wiring, its thermal (linear) expansion rate is desired to be about 20 ppm of that of Cu. It is also known that when the low-k layer of an organic material has a linear or side chain of benzene rings in its molecular structure, the thermal resistance is increased and the thermal expansion rate is decreased. However, no attempt has been proposed for measuring the thermal expansion rate of the low-k layer and developing the low-k layer in response to the thermal expansion rate. In a conventional method, the low-k layer is developed in response to the dielectric constant or the thermal resistivity. The measurement of the thermal resistivity may fracture the material itself. The measurement of the thermal resistivity is implemented with difficulty.

This embodiment of the present invention conducts the foregoing thermal expansion/shrinkage rate measuring method with the use of X-rays and determines the synthesizing conditions of the low-k layer characterized by employment of the benzene rings. Accordingly, the thermal expansion/shrinkage rate can be calculated with no possibility of fracture, as it allows the conditions to be determined more directly than the measurement of the thermal resistivity. Therefore, the low-k layer can be improved efficiently during development, responsive to the thermal expansion/shrinkage rate of Cu.

## Claims

1.  An automatic thermal expansion/shrinkage rate measuring apparatus comprising:

    an X-ray source for exposing a thin layer specimen to X-rays;
    an X-ray detector for detecting the reflection of X-rays reflected from the thin layer specimen;
    a specimen table on which the thin layer specimen is provided;
    a specimen temperature controller for controllably determining the temperature of the thin layer specimen; and

    a control computer for automatically conducting controlling and calculating actions to determine the thermal expansion/shrinkage rate, wherein the specimen temperature controller holds the thin layer specimen at one temperature in a predetermined range of temperatures, the reflection rate of X-rays is measured at each temperature in one temperature range, the thickness of the thin layer is calculated from the reflection rate of the X-rays, and the thermal expansion/shrinkage rate is determined from the thickness of the thin film calculated at each temperature.

2.  An automatic thermal expansion/shrinkage rate measuring apparatus according to claim 1, wherein when the thin layer varies within a specific range of expansion/shrinkage rates, its thermal expansion/shrinkage rate is calculated in that range.

3.  An automatic thermal expansion/shrinkage rate measuring apparatus according to claim 1 or 2, further comprising:

    a mechanism for moving the thin layer specimen between a heater and the X-ray detector so that the two remain at a given angle to each other.

4.  A thermal expansion/shrinkage rate measuring apparatus comprising:

    an X-ray source for exposing a thin layer specimen to X-rays;
    an X-ray detector for detecting the reflection of X-rays reflected from the thin layer specimen;
    a specimen table on which the thin layer specimen is provided; and
    a specimen temperature controller for controllably determining the temperature of the thin layer specimen, wherein
    the specimen temperature controller holds the thin layer specimen at a predetermined temperature, the reflection rate of X-rays is measured, the thickness of the thin layer is calculated from the reflection rate of X-rays, and the thermal expansion/shrinkage rate is determined from a change in the thickness of the thin film.

5.  A thermal expansion/shrinkage rate measuring apparatus according to claim 4, wherein the thin layer comprises two or more layers arranged in a stack.

6.  A thermal expansion/shrinkage rate measuring apparatus comprising:

    an X-ray source for exposing a thin layer specimen to X-rays;

an X-ray detector for detecting the reflection of X-ray reflected from the thin layer specimen;
a specimen table on which the thin layer specimen is provided; and
a programmable specimen temperature controller for controllably determining the temperature of the thin layer specimen, wherein the programmable specimen temperature controller controls the temperature of the thin layer specimen with a specific program, the reflection rate of X-rays is measured at a predetermined temperature, the thickness of the thin layer is calculated from the reflection rate of X-rays, and the thermal expansion/shrinkage rate is determined from a change in the thickness of the thin film.

7. A thermal expansion/shrinkage rate measuring apparatus according to claim 6, wherein
the specific program is a temperature increasing program for increasing the temperature of the thin layer specimen.

8. A thermal expansion/shrinkage rate measuring apparatus according to claim 6, wherein
the specific program is a temperature increasing and decreasing program for increasing and decreasing the temperature of the thin layer specimen.

9. A thermal expansion/shrinkage rate measuring apparatus according to claim 8, wherein
the temperature increasing and decreasing program has temperature increasing and decreasing rates which are included in the curing conditions of the thin layer specimen.

10. A method for measuring thermal expansion/shrinkage rate comprising the steps of:

controlling the temperature of a thin layer specimen provided on a specimen table with a specific program;
exposing the thin layer specimen to X-rays;
detecting the reflection of X-rays reflected from the thin layer specimen; and
calculating the thickness of the thin layer from the reflection rate of X-rays and determining the thermal expansion/shrinkage rate from a change in the thickness of the thin film.

11. A method for measuring thermal expansion/shrinkage rate according to claim 10, wherein
the specific program is a temperature increasing program for increasing the temperature of the thin layer specimen.

12. A method for measuring thermal expansion/shrinkage rate according to claim 10, wherein
the specific program is a temperature increasing and decreasing program for increasing and decreasing the temperature of the thin layer specimen.

13. A method for measuring thermal expansion/shrinkage rate according to claim 12, wherein
the temperature increasing and decreasing program is a temperature increasing and decreasing program included in the curing conditions of the thin layer specimen.

14. A method for determining cure conditions comprising the steps of:

exposing a thin layer deposited on a substrate to X-rays;
detecting the reflection of X-rays reflected from the thin layer;
increasing and decreasing the temperature of the thin layer with a temperature increasing and decreasing program;
measuring the reflection rate of X-rays at predetermined temperatures during the temperature increase and decrease; and
calculating the thickness of the thin layer from the reflection rate of X-rays and determining the thermal expansion/shrinkage rate from a change in the thickness of the thin film, wherein the curing conditions for a thin layer depositing step are determined by modifying the temperature increasing and decreasing program in response to the thermal expansion/shrinkage rate.

15. A method for modifying layer forming conditions comprising the steps of:

selecting at random a processed substrate on which a thin layer is deposited by a layer forming apparatus;
exposing the processed substrate to X-rays;
detecting the reflection of X-rays reflected from the processed substrate;
increasing and decreasing the temperature of the processed substrate with a specific temperature increasing and decreasing program;
measuring the reflection rate of X-rays at predetermined temperatures during the temperature increase and decrease; and
calculating the thickness of the thin film from the reflection rate of X-rays and determining the thermal expansion/shrinkage rate of the thin layer from a change in the thickness, wherein the layer forming conditions for the layer forming apparatus can be modified in response to the thermal expansion/shrinkage rate.

**16.** A multi-chamber processing apparatus comprising:

a plurality of processing chambers including at least a layer depositing chamber; and
a conveying chamber located next to the processing chambers and provided with a conveying apparatus for loading and unloading a processed substrate to and from the processing chambers, wherein
one of the processing chambers is a thermal expansion/shrinkage rate measuring chamber comprising an X-ray source, an X-ray detector, and a temperature controller for controlling the temperature of the processed substrate so that while the temperature of the processed substrate is increased and decreased with a specific temperature increasing and decreasing program, the thermal exposure/shrinkage rate is determined from the reflection rate of X-rays.

**17.** A method for modifying low-k layer synthesizing conditions comprising the step of:

exposing a low-k layer deposited on a semiconductor substrate to X-rays;
detecting the reflection of X-rays reflected from the low-k layer;
increasing and decreasing the temperature of the low-k layer with a specific temperature increasing and decreasing program;
measuring the reflection rate of X-rays at predetermined temperatures during the temperature increase and decrease; and
calculating the thickness of the low-k layer from the reflection rate of X-rays and determining the thermal expansion/shrinkage rate of the low-k layer from a change in the thickness, wherein the synthesizing conditions for the low-k layer are modified in response to the thermal expansion/shrinkage rate.

Fig.1

Fig.2

Fig.3

Fig.4

X線源
10
X-Ray source

θ
2θ

X線
検出器
30
X-Ray detector

60 { 61
62

20

21

温度制御
40
Temperature controller

51

制御演算部
50
Control computer

Fig.5

Start

常温での膜厚測定 ～ S1
Measure thickness of layer at normal temperature

加熱して膜厚測定 ～ S2
Measure thickness of layer at increased temperature

演算処理 ～ S3 Arithmetic process

熱膨張収縮率の算出 ～ S4
Calculate thermal expansion/shrinkage rate

Display as graph グラフ表示 ～ S5

End

EP 1 517 136 A2

Fig.6

| Temperature 温度 (°C) | Thickness of layer 膜厚 Angstrom |
|---|---|
| 20 | 1000 |
| 40 | 1002 |
| 60 | 1004 |
| 80 | 1006 |
| 100 | 1008 |
| 120 | 1010 |
| 140 | 1015 |
| 160 | 1020 |
| 180 | 1025 |
| 200 | 1030 |

Thickness of layer 膜圧(Å)

248ppm

100 ppm

膜の温度(°C)
Temperature of layer

Fig.7

Fig.8

Fig.9

Fig.10

Fig.11

73

Low-k
74
Low-k

Low-k
74
Low-k
Low-k

72

71          71

Fig.12

Fig.13

Fig.14

Materials

Linear thermal expansion rate

| | 材料 | 線熱膨張率<br>(ppm/deg.C) |
|---|---|---|
| 1 | Polyethylene | 100-200 |
| 2 | Polystyrene | 34-210 |
| 3 | PMMA | 80 |
| 4 | Al | 29 |
| 5 | Cu | 20 |
| 6 | Ti | 9 |
| 7 | Ta | 6.6 |
| 8 | W | 4.5 |
| 9 | Si | 2.4 |
| 10 | $SiO_2$ | 0.4 |